# EUROPÄISCHE PATENTSCHRIFT

(11) **EP 1 167 123 B1**
(45) Veröffentlichungstag und Bekanntmachung des Hinweises auf die Patenterteilung: **04.05.2005**
(21) Anmeldenummer: 01114846.7
(22) Anmeldetag: 28.06.2001
(51) Int. Cl.: B60R 13/00, B60R 21/20

(54) **Emblem für Gassackmodulabdeckung und Gassackmodul**
Emblem for airbag module cover and airbag module
Emblème pour couvercle de module de coussin gonflable et module de coussin gonflable

(30) Priorität: 30.06.2000 DE 20011466 U
(43) Veröffentlichungstag der Anmeldung: 02.01.2002
(73) Patentinhaber: TRW Automotive Safety Systems GmbH, 63743 Aschaffenburg (DE)
(72) Erfinder: Derrick, John Oliver, 97265 Hettstadt (DE); Heindl, Ralph, 63768 Hösbach (DE)
(74) Vertreter: Kitzhofer, Thomas, Dipl.-Ing.

(56) Entgegenhaltungen:
- DE-A- 19 929 762
- US-A- 1 495 456
- US-A- 5 685 056
- PATENT ABSTRACTS OF JAPAN vol. 1997, no. 06, 30. Juni 1997 (1997-06-30) -& JP 09 048315 A (NIPPON NAME PLATE KOGYO KK;IZUMI JIDOSHA KK), 18. Februar 1997 (1997-02-18)
- PATENT ABSTRACTS OF JAPAN vol. 017, no. 527 (M-1484), 22. September 1993 (1993-09-22) -& JP 05 139231 A (TOYODA GOSEI CO LTD), 8. Juni 1993 (1993-06-08)

## Beschreibung

Die Erfindung betrifft eine Gassackmodulabdeckung, mit einer in montiertem Zustand von außen sichtbaren Vorderseite und einer Rückseite sowie wenigstens einem als separates Teil ausgebildeten, auf der Vorderseite sichtbaren Emblem. Ferner betrifft die Erfindung ein Gassackmodul.

An Abdeckungen werden immer häufiger immer aufwendigere Embleme befestigt, die überwiegend aus Metall sind. Beim Öffnen der Abdeckung durch den Gassack besteht aber die Forderung, daß das relativ schwere Emblem sicher an der Abdeckung befestigt bleibt und sich nicht von ihr löst. Aus diesem Grund werden die an der Abdeckung mit rückseitigen, das Gewicht des Emblems leider erhöhenden Halteplatten gesichert und an diesen durch Schrauben oder Nieten befestigt.

Die DE 199 29 762 A1 zeigt ein Gassackmodul mit einer Abdeckung, die eine zentrale Öffnung besitzt, durch die sich ein hinter der Abdeckung liegendes Emblem erstreckt. Das Emblem besitzt ein eigenes Fangband, das die Bewegung des Emblems beim Aufreißen der Abdeckung begrenzt.

Die Erfindung schafft eine Abdeckung mit einem Emblem, welches einfacher hergestellt und einfacher und mit weniger Aufwand an der Abdeckung befestigt werden kann. Dies wird bei einer Abdeckung der eingangs genannten Art dadurch erreicht, daß der Haltevorsprung als Halteplatte ausgebildet ist. Die Halteplatte erhöht die Stabilität der Abdeckung, stützt sie vollflächig, so daß eine bessere Haptik der Abdeckungsoberfläche an der Vorderseite erreicht werden kann. Die Abdeckung hat wenigstens eine Klappe, die beim Öffnen der Abdeckung eine Austrittsöffnung für den Gassack freigibt. Die Halteklappe verbindet die Klappe mit nicht geöffneten, angrenzenden Bereichen der Abdeckung und erstreckt sich damit über einen der Klappe zugeordneten Scharnierbereich. Das Emblem ist dabei so an der Abdeckung befestigt, daß die Halteplatte beim Schwenken der Klappe gebogen wird, also der Scharnierbereich unterstützt wird und die Klappe auch über die Halteplatte an der Abdeckung fixiert bleibt. Das Emblem ist so ausgebildet, daß es von der Rückseite zu montieren ist, daß die Abdeckung wenigstens eine Öffnung hat, durch die sich ein auf der Vorderseite sichtbarer Abschnitt des Emblems erstreckt und daß das

Emblem einen gegenüber der Öffnung seitlich vorstehenden, rückseitigen Haltevorsprung zur Befestigung des Emblems am Rest der Abdeckung aufweist. Das Emblem gemäß der Abdeckung nach der Erfindung wird von der Rückseite her montiert, indem einfach die sichtbaren Abschnitte in entsprechende Öffnungen gesteckt werden und dann vorderseitig sichtbar sind. Halteabschnitte, die einstückig mit den sichtbaren Abschnitten verbunden sind und nicht durch Nieten oder Schrauben an dem sichtbaren Abschnitt fixiert werden, hält das Emblem an der Abdeckung. Das gesamte Emblem besteht damit nur aus einem Teil und nicht aus mehreren Teilen wie im Stand der Technik. Das Emblem liegt auch nicht vorderseitig und rückseitig an der Abdeckung an, um dazwischen verspannt zu werden, vergleichbar mit zwei über Schrauben verbundenen Klemmplatten. Damit ergibt sich ferner der Vorteil, daß beim Befestigen auch keine hohe Fügekraft auf das Emblem ausgeübt wird, wie dies beim Anschrauben oder Vernieten des Emblems im Stand der Technik auftrat. Auch das sogenannte Abstanzen des Emblems im später sichtbaren Bereich des Emblems kann entfallen, womit eine höhere optische Qualität des Emblems erreicht wird. Bislang werden die Embleme geprägt und anschließend aus dem Blech ausgestanzt, wobei der im montierten Zustand des Emblems sichtbare Bereich gestanzte Ränder aufwies. Bei der Erfindung kann die Stanzung im Bereich des Emblems erfolgen, der später auf der Rückseite der Abdeckung anliegt, so daß die Qualitätsanforderungen an den Stanzvorgang reduziert werden können. Vorderseitig filigrane Emblemabschnitte können durch die Erfindung nunmehr erzielt werden, was bislang nicht möglich war. Bislang hätten sich nämlich vorderseitig Abschnitte des filigranen Teiles seitlich über die Öffnung hinaus erstrecken müssen, damit die im Stand der Technik übliche Verspannung des Emblems durch Anlage an der Vorder- und der Rückseite erzielt wird.

Vorzugsweise steht der sichtbare Abschnitt der Vorderseite gegenüber der Öffnung seitlich nicht über, jedoch wäre es denkbar, einen minimalen Überstand zu erlauben, um sichtbare Spalte zu vermeiden, wenn z.B. die Passung zwischen dem sichtbaren Abschnitt und der Öffnung nicht als Preßpassung ausgebildet ist.

Vorzugsweise sind mehrere sichtbare Abschnitte mit zugeordneten Öffnungen in der Abdeckung vorgesehen. Diese Abschnitte werden durch einen gemeinsamen Haltevorsprung auf der Rückseite einstückig miteinander verbunden. Vorzugsweise sind alle vorderseitigen sichtbaren Abschnitte durch den gemeinsamen Haltevorsprung einstückig miteinander verbunden, um den Aufwand für Herstellung und Montage gering zu halten.

Der Haltevorsprung ist an der Abdeckung rückseitig durch Aufnahmetaschen, pilzförmige Vorsprünge oder rückseitig an der Abdeckung vorgesehene Befestigungsklammern oder zusätzliche Haltebleche arretiert.

Durch das Biegen der Halteplatte wird die Klappe nach dem Öffnen am Zurückschwenken gehindert.

Das erfindungsgemäße Gassackmodul, welches einen Gassack, einen Gasgenerator und eine Abdeckung nach der Erfindung aufweist, sieht eine Abstimmung von Gassack, Gasgenerator und Abdeckung dergestalt vor, daß nach dem Entfalten des Gassacks die Klappe durch die gebogene Halteplatte im wesentlichen im vollständig nach außen verschwenkten Zustand gehalten ist. Das heißt, die Klappe bleibt um 180° nach außen geschwenkt und steht nicht um 90° gegenüber der Außenseite der nicht geöffneten Abdeckung nach außen vor.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Fig. 1 eine Draufsicht auf ein Lenkrad mit einer erfindungsgemäßen Modulabdeckung,
Fig. 2 einen Querschnitt durch einen Abschnitt der in Fig. 1 gezeigten erfindungsgemäßen Gassackmodulabdeckung gemäß einer ersten Ausführungsform im geschlossenen Zustand,
Fig. 3 die Abdeckung nach Fig. 2 im geöffneten Zustand,
Fig. 4 eine Draufsicht nur auf das bei der Abdeckung nach den vorhergehenden Figuren eingesetzte Emblem und
Fig. 5 eine Querschnittsansicht durch eine zweite Ausführungsform der erfindungsgemäßen Gassackmodulabdeckung, wobei nur ein Abschnitt der Abdeckung dargestellt ist.

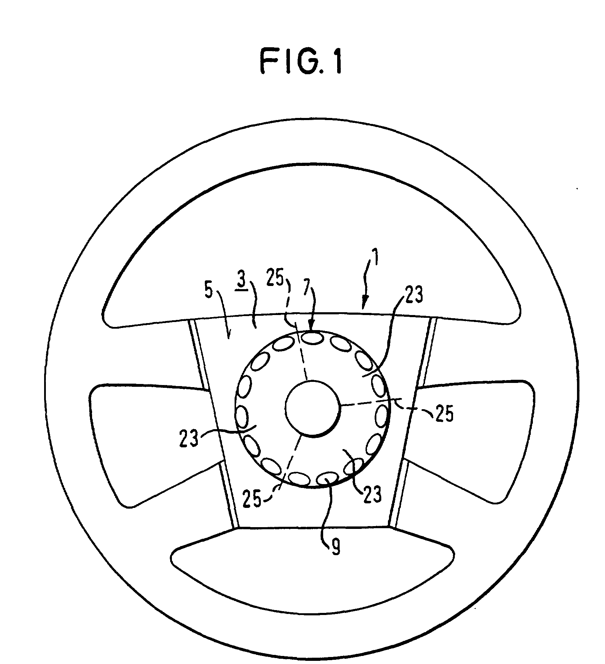

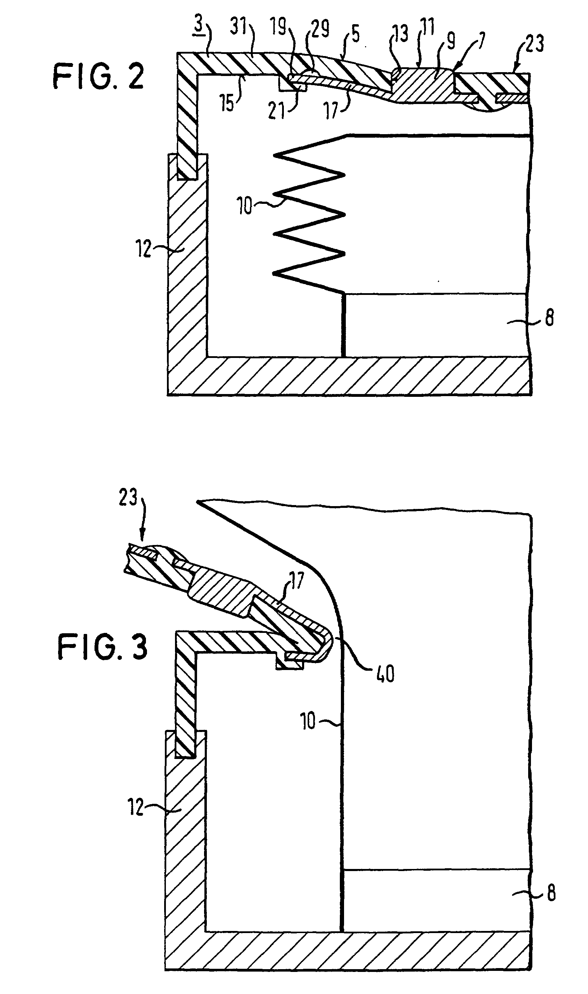

In Fig. 1 ist ein Fahrzeuglenkrad mit einem Gassackmodul 1 im Bereich der Lenkradnabe dargestellt, welches eine Abdeckung 3 mit einer in Fig. 1 dargestellten Vorderseite 5 aufweist. Vorderseitig ist auch ein an der Abdeckung 3 befestigtes Emblem 7 sichtbar, welches einen aus filigranen, ovalen Teilen zusammengesetzten Ring darstellt. Das Gassackmodul besteht ferner, wie in Fig. 2 zu sehen ist, aus einem Gasgenerator 8 und einem Gassack 10, die in einem Behälter 12, an dem auch die Abdeckung 3 befestigt ist, untergebracht sind. Das Emblem 7 besteht aus sichtbaren, zapfenförmigen Abschnitten 9, deren Stirnseite 11 in Fig. 1 sichtbar ist und die durch Öffnungen 13 in der Abdeckung 5 hindurchragen. Die Öffnungen 13 sind so auf die sichtbaren Abschnitte 9 abgestimmt, daß die Abschnitte 9 mit einer Preßpassung in den Öffnungen 13 gehalten sind. Sämtliche Abschnitte 9 sind auf der Rückseite 15 der Abdeckung 3 über einen Haltevorsprung in Form einer Halteplatte 17 einstückig miteinander verbunden. Die Halteplatte 17 ist großflächig ausgebildet und stabilisiert die Abdeckung 3. Die Ränder 19 der Halteplatte 17 sind in einstückig auf der Rückseite der Abdeckung 3 angeformte Haltetaschen 21 eingesteckt und dadurch an der Abdeckung 3 fixiert. Wie in Fig. 2 zu erkennen ist, stehen die sichtbaren Abschnitte 9 vorderseitig gegenüber der Öffnung 13 seitlich nicht über. Das Emblem 7 wird rückseitig und damit versteckt montiert, indem das einstückige Emblem einfach von hinten so eingeführt wird, daß die Abschnitte 9 durch die Öffnungen 13 ragen und die Ränder 19 in die Taschen 21 schnappen. Zusätzliche Befestigungselemente sind nicht erforderlich, jedoch kann durchaus auch zusätzlicher Klebstoff verwendet werden. Durch die gegenüber den Öffnungen 13 seitlich deutlich vorstehende Halteplatte 17 werden nicht nur die sichtbaren Abschnitte 9 miteinander verbunden, sondern das gesamte Emblem wird an der Abdeckung 3 selbst beim Öffnen der Abdeckung, wie dies in Fig. 3 gezeigt ist, gehalten, ohne daß vorderseitig zusätzliche Maßnahmen zur Sicherung des Emblems vorgesehen sind, die auf Kosten der Optik gehen würden.

Die Abdeckung 3 hat Abschnitte in Form von Klappen 23, die durch die in Fig. 1 unterbrochen dargestellten Linien 25 voneinander getrennt sind. Die Linien 25 stellen Begrenzungslinien zwischen benachbarten Klappen 23 dar. Rückseitig sind hierzu Vertiefungen in der Abdeckung vorgesehen. Scharnierbereiche 29, die ebenfalls durch Vertiefungslinien auf der Rückseite der Abdeckung 3 vorgesehen sind, sollen ein Nachaußenschwenken der Klappen 23 im Rückhaltefall erleichtern.

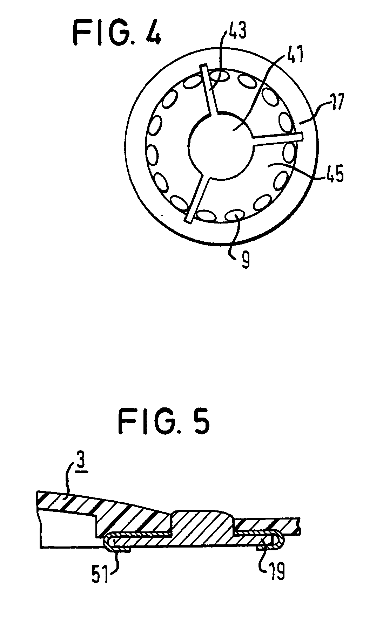

Wie in Fig. 2 zu erkennen ist, erstreckt sich die Halteplatte 17 vom Bereich der Klappen 23 bis über die Scharnierbereiche 29 in den an die Klappen 23 angrenzenden, im Rückhaltefall nicht verschwenkten Bereich 31 der Abdeckung 3. Da die Halteplatte 17 sowohl an den angrenzenden Bereichen 31 als auch an den Klappen 23 befestigt ist und auch im aufgeschwenkten Zustand der Klappen (vgl. Fig. 3) befestigt bleibt, wird sie im Rückhaltefall plastisch gebogen. Der Gassack 11, der die Abdeckung öffnet und eine Austrittsöffnung 40 freigelegt, der Gasgenerator 8 und die Abdeckung 3 selbst sind so aufeinander abgestimmt, daß nach dem Entfalten des Gassacks 10 (siehe Fig. 3) die Klappen 23 durch die gebogene Halteplatte 17 im wesentlichen im vollständig nach außen verschwenkten Zustand gehalten sind, also an einem Zurückschwenken gehindert werden. Die Halteplatte 17 als Metallteil beeinflußt damit das Öffnen und das Schließen der Klappen 23. Um überhaupt ein Biegen der großflächigen Halteplatte 17 zu erreichen, weist diese von einer zentrischen Öffnung 41 in der Halteplatte (vgl. Fig. 4) ausgehende, radial nach außen verlaufende und sich längs der Begrenzungslinien 25 erstreckende Schlitze 43 auf, durch die den Klappen 23 zugeordnete Segmente 45 in der Halteplatte 17 entstehen.

Die Halteplatte 17 verhindert auch ein Abreißen der Klappen 23 beim Öffnen der Abdeckung und erhöht damit die Funktionsfähigkeit des Moduls vor allem bei extremen Umgebungstemperaturen.

Bei der Ausführungsform nach Fig. 5 ist anstatt der Taschen 21 eine rückseitig an der Abdeckung 3 befestigte Klammer 51 vorgesehen, die die Ränder 19 der Halteplatte 17 umschließt.

## Patentansprüche

1. Gassackmodulabdeckung, mit einer in montiertem Zustand von außen sichtbaren Vorderseite (5) und einer Rückseite (15) sowie wenigstens einem als separates Teil ausgebildeten, auf der Vorderseite (5) sichtbaren Emblem (7), wobei das Emblem (7) so ausgebildet ist, daß es von der Rückseite (15) zu montieren ist, die Abdeckung (3) wenigstens eine Öffnung (13) hat, durch die sich ein auf der Vorderseite sichtbarer Abschnitt (9) des Emblems (7) erstreckt, und das Emblem (7) einen gegenüber der Öffnung (13) seitlich vorstehenden, rückseitigen Haltevorsprung aufweist,
**dadurch gekennzeichnet, daß**
der Haltevorsprung als Halteplatte ausgebildet ist und die Abdeckung (3) wenigstens eine Klappe (23) aufweist, die beim Öffnen der Abdeckung (3) eine Austrittsöffnung für den Gassack (10) freigibt, und daß die Halteplatte (17) von der Klappe (23) über einen der Klappe (23) zugeordneten Scharnierbereich (29) bis in einen an die Klappe angrenzenden Bereich (31) der Abdeckung (3) ragt, wobei das Emblem (7) so an der Abdeckung (3) befestigt ist, daß die Halteplatte (17) beim Schwenken der Klappe (23) gebogen wird.

2. Gassackmodulabdeckung nach Anspruch 1, **dadurch gekennzeichnet, daß** der sichtbare Abschnitt (9) vorderseitig gegenüber der Öffnung (13) seitlich nicht vorsteht.

3. Gassackmodulabdeckung nach Anspruch 1 oder 2, **gekennzeichnet durch** mehrere sichtbare Abschnitte (9) mit zugeordneten Öffnungen (13) in der Abdeckung (3), wobei die sichtbaren Abschnitte (9) **durch** einen gemeinsamen Haltevorsprung einstückig miteinander verbunden sind.

4. Gassackmodulabdeckung nach Anspruch 3, **dadurch gekennzeichnet, daß** alle vorderseitigen sichtbaren Abschnitte (9) durch den gemeinsamen Haltevorsprung miteinander einstückig verbunden sind.

5. Gassackmodulabdeckung nach einem der vorhergehenden Ansprüche, **dadurch gekennzeichnet, daß** an der Abdeckung (3) rückseitig Aufnahmetaschen (21), in die Ränder (19) des Haltevorsprungs ragen, angeformt sind.

6. Gassackmodulabdeckung nach einem der vorhergehenden Ansprüche, **dadurch gekennzeichnet, daß** an der Abdeckung (3) rückseitig wenigstens eine Befestigungsklammer (51) für die Arretierung des Haltevorsprungs angebracht ist.

7. Gassackmodulabdeckung nach einem der vorhergehenden Ansprüche, **dadurch gekennzeichnet, daß** die Halteplatte (17) im Bereich der Klappe (23) und des an die Klappe (23) angrenzenden Bereichs (31) an der Abdeckung (3) befestigt ist.

8. Gassackmodulabdeckung nach einem der vorhergehenden Ansprüche, **dadurch gekennzeichnet, daß** die Halteplatte (17) Schlitze (43) aufweist, die längs von Begrenzungslinien (25) benachbarter Klappen (23) verlaufen.

9. Gassackmodul, mit
einem Gassack (10),
einem Gasgenerator (8) und
einer Abdeckung (3) nach einem der vorhergehenden Ansprüche,
**dadurch gekennzeichnet, daß**
Gassack (10), Gasgenerator (8) und Abdeckung (3) so aufeinander abgestimmt sind, daß nach dem Entfalten des Gassacks (10) die Klappe (23) durch die gebogene Halteplatte (17) im wesentlichen im vollständig nach außen verschwenkten Zustand gehalten ist.

## Claims

1. A gas bag module cover, comprising a front side (5) externally visible in its mounted state and a rear side (15) as well as at least one emblem (7) made as a separate part and visible on the front side (5), the emblem (7) being made such that it can be mounted from the rear side (15), the cover (3) having at least one opening (13) through which a section (9), which is visible on the front side, of the emblem (7) extends, and the emblem (7) having a holding projection on the rear side that protrudes laterally with respect to the opening (13),
**characterized in that**
the holding projection is designed as a holding plate, and the cover (3) has at least one flap (23) which when the cover (3) is opened exposes an exit opening for the gas bag (10), and that the holding plate (17) protrudes from the flap (23) via a hinge region (29) associated with the flap (23) as far as into a region (31) of the cover (3) adjacent to the flap, the emblem (7) being attached to the cover (3) such that the holding plate (17) is bent when the flap (23) is pivoted.

2. The gas bag module cover according to claim 1, **characterized in that** the visible section (9) does not protrude laterally on the front side with respect to the opening (13).

3. The gas bag module cover according to claim 1 or 2, **characterized by** a plurality of visible sections (9) with associated openings (13) in the cover (3), the visible sections (9) being integrally connected with one another by a common holding projection.

4. The gas bag module cover according to claim 3, **characterized in that** all visible sections (9) on the front side are integrally connected with one another by the common holding projection.

5. The gas bag module cover according to any of the preceding claims, **characterized in that** receiving pockets (21), into which edges (19) of the holding projection protrude, are integrally molded with the rear side of the cover (3).

6. The gas bag module cover according to any of the preceding claims, **characterized in that** at least one fastening clamp (51) for arresting the holding projection is attached to the rear side of the cover (3).

7. The gas bag module cover according to any of the preceding claims, **characterized in that** the holding plate (17) is attached to the cover (3) in the region of the flap (23) and the region (31) adjacent to the flap (23).

8. The gas bag module cover according to any of the preceding claims, **characterized in that** the holding plate (17) has slots (43) which extend along boundary lines (25) of neighboring flaps (23).

9. A gas bag module, comprising
a gas bag (10),
a gas generator (8), and
a cover (3) according to any of the preceding claims,
**characterized in that**
the gas bag (10), the gas generator (8) and the cover (3) are adapted to each other such that after the deployment of the gas bag (10) the flap (23) is held by the bent holding plate (17) substantially in its condition pivoted fully outwards.

## Revendications

1. Couvercle de module de coussin à gaz, comportant une face antérieure (5) visible depuis l'extérieur et une face postérieure (16) ainsi qu'au moins un emblème (7) réalisé en tant qu'élément séparé et visible sur la partie antérieure (5), l'emblème (7) étant réalisé de telle sorte qu'il doit être monté depuis la face postérieure (15), le couvercle (3) ayant au moins une ouverture (13) à travers laquelle s'étend un tronçon (9) de l'emblème, qui est visible depuis la face antérieure, et l'emblème (7) présentant une saillie de retenue sur la face postérieure, qui fait saillie latéralement par rapport à l'ouverture (13).
**caractérisé en ce que**
la saillie de retenue est réalisée sous forme de plaque de retenue et le couvercle (3) présente au moins un volet (23) qui, lors de l'ouverture du couvercle (3) dégage une ouverture de sortie pour le coussin à gaz (10), et **en ce que** la plaque de retenue (17) fait saillie depuis le volet (23) via une région de charnière (29) associée au volet (23) jusqu'à une région (31) du couvercle (30), qui est adjacente du volet (23), l'emblème (7) étant fixé sur le couvercle (3) de telle sorte que la plaque de retenue (17) est repliée lorsqu'on fait pivoter le volet (23).

2. Couvercle de module de coussin à gaz selon la revendication 1, **caractérisé en ce que** le tronçon (9) visible ne fait pas saillie latéralement sur la face antérieure par rapport à l'ouverture (13).

3. Couvercle de module de coussin à gaz selon la revendication 1 ou 2, **caractérisé par** plusieurs tronçons (9) visibles avec des ouvertures (13) associées dans le couvercle (3), les tronçons (9) visibles étant reliés les uns aux autres d'un seul tenant par une saillie de retenue commune.

4. Couvercle de module de coussin à gaz selon la revendication 3, **caractérisé en ce que** tous les tronçons (9) visibles sur la face antérieure sont reliés les uns aux autres d'un seul tenant par une saillie de retenue commune.

5. Couvercle de module de coussin à gaz selon l'une des revendications précédentes, **caractérisé en ce que** des poches de réception (21) dans lesquelles font saillie des bords (19) de la saillie de retenue sont façonnées sur la face postérieure du couvercle (3).

6. Couvercle de module de coussin à gaz selon l'une des revendications précédentes, **caractérisé en ce qu'**au moins une agrafe de fixation (51) pour le blocage de la saillie de retenue est montée sur la face postérieure du couvercle (3).

7. Couvercle de module de coussin à gaz selon l'une des revendications précédentes, **caractérisé en ce que** la plaque de retenue (17) est fixée sur le couvercle (3) dans la région du volet (23) et de la région (31) adjacente au volet (23).

8. Couvercle de module de coussin à gaz selon l'une des revendications précédentes, **caractérisé en ce que** la plaque de retenue (17) présente des fentes (43) qui s'étendent le long de lignes de délimitation (25) de volets 823) voisins.

9. Module de coussin à gaz, comportant
un coussin à gaz (10),
un générateur de gaz (8) et
un couvercle (3) selon l'une des revendications précédentes,
**caractérisé en ce que**
le coussin à gaz (10), le générateur de gaz (8) et le couvercle (3) sont adaptés les uns aux autres de telle sorte qu'après le déploiement du coussin à gaz (10), le volet (23) est retenu par la plaque de retenue (17) repliée sensiblement dans l'état de pivotement total vers l'extérieur.
